# EUROPEAN PATENT APPLICATION

(11) **EP 4 371 453 A1**
(43) Date of publication of application: **22.05.2024**
(21) Application number: 23210618.7
(22) Date of filing: 17.11.2023
(51) Int. Cl.: A47J 43/14

(54) **AUTOMATIC EGG CRACKER**

(30) Priority: 21.11.2022 CN 202211457259
(71) Applicant: Dongguan Yuwei Food Machinery Technology Co., Ltd, Dongguan, Guangdong 523000 (CN)
(72) Inventor: ZHOU, Yujian, Shaoyang, 523000 (CN)
(74) Representative: Zaboliene, Reda

(57) **Abstract**

Disclosed in the present disclosure is an automatic egg cracker. The automatic egg cracker includes two symmetrically-arranged egg holders and two symmetrically-arranged egg-cracking knives, where the egg holders are provided with upward openings to form egg troughs, and the egg-cracking knives impact eggs from side surfaces for cracking. A push rod is arranged behind the egg holder to synchronously drive at least one side of the egg-cracking knife to open to crack the egg. The egg trough having the upward opening is arranged, the egg is placed in the egg trough, and the egg-cracking knife impacts the egg from the side surface for cracking, such that egg liquid between the egg-cracking knife and an eggshell will not stagnate to avoid waste, and the egg is stably placed in the egg trough and will not fly away in a cracking process.

## Description

### TECHNICAL FIELD

The present disclosure belongs to the technical field of food processing machinery, and particularly relates to an automatic egg cracker.

### BACKGROUND

In an automatic egg frying machine, an automatic egg cracker is generally configured for separating egg liquid from an eggshell. In the prior art, a method of cracking an egg from bottom to top is employed for an egg cracker, but the following problems exist:
1. An egg-cracking knife is stuck into a side of the eggshell to form a dam, and the egg liquid flows and stagnates in the dam, causing waste.
2. Since the egg is cracked from bottom to top, a pressure is needed to press an upper end of the egg so as to prevent it from flying away in the process of cracking.
3. The egg cracker cannot throw shells automatically without an external auxiliary device. For example, the eggshell is blown off with an air gun.

### SUMMARY

### (1) Technical problems to be solved

In view of the defects of the prior art, an objective of the present disclosure is to provide an automatic egg cracker so as to solve the technical problems of egg liquid stagnation and waste and space shortage caused by additionally arranging egg pressing and shell dropping devices in the prior art.

### (2) Technical solutions

The present disclosure provides an automatic egg cracker, which includes two symmetrically-arranged egg holders and two symmetrically-arranged egg-cracking knives, where the egg holders are provided with upward openings to form egg troughs, and the egg-cracking knives impact eggs from side surfaces for cracking. A push rod is arranged behind the egg holder to synchronously drive at least one side of the egg-cracking knife to open to crack the egg.

Further, both sides of the egg-cracking knife are opened simultaneously to crack the egg.

Further, one side of the egg-cracking knife is fixed, and the other side is opened to crack the egg.

Further, the egg-cracking knife includes a left blade, a right blade, a sliding block, and a fixing frame for mounting the sliding block, where the left blade is fixedly arranged on the sliding block by means of a left blade connecting member, and the right blade is fixedly arranged on the sliding block by means of a right blade connecting member. The left blade and the right blade are slidably mounted in a sliding groove in an upper portion of the fixing frame by means of the sliding block. A locking assembly is arranged on the sliding block, an energy storage device configured for pushing the egg-cracking knife to crack the egg is arranged at one end of the side edge of the sliding block close to a locking direction, and a reset trigger rod is arranged at the other end. An elastic egg blade member is arranged between the left blade connecting member and the right blade connecting member.

Further, the locking assembly includes a sliding and buckling block arranged on the sliding block, where a locking groove is formed at a side edge of the sliding and buckling block, and a sliding hook matching the locking groove is arranged on the sliding and buckling block.

Further, one end of the sliding hook is configured for fixing the locking groove in the sliding and buckling block, the other end of the sliding hook is provided with an egg-cracking trigger rod, and a middle portion of the sliding hook is fixed by means of a shaft pin so as to enable both ends to rotate.

Further, the egg holder includes a left egg supporting block and a right egg supporting block, and when the left egg supporting block and the right egg supporting block get close to each other side by side, the egg trough with the upward opening for placing the egg is formed.

Further, the push rod is a double-rod push rod and is fixedly arranged below the fixing frame, and a left egg holder connecting member and a right egg holder connecting member are arranged on both sides of the push rod. An egg holder trigger rod is arranged at one end of the push rod, and an egg holder elastic member is arranged between the left egg holder connecting member and the right egg holder connecting member.

Further, an upper end of the left egg holder connecting member is provided with a left guide block with an inclined plane, and a lower end of the left blade connecting member is provided with a left convex block extending downwards. An upper end of the right egg holder connecting member is provided with a right guide block with an inclined plane, a lower end of the right blade connecting member is provided with a right convex block extending downwards, and the left guide block and the right guide block, and the left convex block and the right convex block are symmetrically arranged respectively.

Further, the automatic egg cracker further includes a trigger mechanism and a driving device, where the trigger mechanism includes an egg-cracking trigger portion, a reset trigger portion and an egg holder trigger portion, and the egg holder trigger portion is also configured for triggering egg cracking.

The egg is placed in the egg trough, the egg-cracking knife impacts the egg from the side surface, and egg liquid between the egg-cracking knife and an eggshell does not stagnate to avoid waste. Moreover, the egg is stably placed in the egg trough and will not fly away in a cracking process. The egg cracker is driven to slide in a straight line by means of the driving device, such that all egg cracking, eggshell opening, resetting and shell dropping operations can be automatically completed at one time, other auxiliary devices are not required, and a mounting space is greatly saved.

### (3) Beneficial effects

Compared with the prior art, the present disclosure has the beneficial effects as follows:
1. According to the present disclosure, the egg-cracking knife capable of cracking the egg from the side surface is arranged, such that the egg-cracking knife does not stop the egg liquid from flowing out at the side edge of the eggshell, and waste is avoided.
2. According to the present disclosure, the egg trough with the upward opening is arranged, such that the egg is positioned at the opening and will not fly out from the position above the opening when being cracked from the side surface, and an additional egg fixing device is not needed.
3. According to the present disclosure, the trigger mechanism is arranged, such that the egg holder can be automatically opened in a sliding process of the egg cracker, thereby achieving an automatic shell dropping operation and improving a space utilization rate. The automatic egg cracker can be applied to a small-sized machine with a small mounting space.

### BRIEF DESCRIPTION OF THE DRAWINGS

FIG. 1: a schematic diagram of egg cracking in the prior art.
FIG. 2: a three-dimensional structure diagram of an example of the present disclosure.
FIG. 3: an exploded diagram of a partial structure of an example of the present disclosure.
FIG. 4: an exploded diagram of an egg-cracking knife of the present disclosure.
FIG. 5: a top view of an egg-cracking knife in a locking state of the present disclosure.
FIG. 6: a top view of an egg-cracking knife in an unlocking state of the present disclosure.
FIG. 7: a three-dimensional schematic diagram of an egg holder of the present disclosure.
FIG. 8: a schematic diagram of an egg holder in an opened state of the present disclosure.
FIG. 9: a schematic state diagram of a left egg holder connecting member, a left blade connecting member, a right egg holder connecting member and a right blade connecting member of the present disclosure after being just unlocked.
FIG. 10: a schematic state diagram of a left egg holder connecting member, a left blade connecting member, a right egg holder connecting member and a right blade connecting member of the present disclosure after being triggered and pushed by a push rod.
FIG. 11: an upward view of an example of the present disclosure.

Reference numerals in figures: 1-egg-cracking knife; 11-right blade; 111-right convex block; 112-right blade connecting member; 12-left blade; 121-left convex block; 122-left blade connecting member; 13-sliding block; 131-reset trigger rod; 132-sliding and buckling block; 1321-locking groove; 14-sliding hook; 141-shaft pin; 142-egg-cracking trigger rod; 15-elastic egg blade member; 2-egg holder; 21-right egg supporting block; 211-right egg holder connecting member; 212-right guide block; 22-left egg supporting block; 221-left egg holder connecting member; 222-left guide block; 23-push rod; 231-egg holder trigger rod; 24-egg holder elastic member; 3-fixing frame; 31-sliding groove; 4-trigger mechanism; 41-egg-cracking trigger portion; 42-reset trigger portion; 43-egg holder trigger portion; 5-energy storage device; 6-upper cover plate; 7-lower cover plate; and 8-driving device.

### DETAILED DESCRIPTION OF EMBODIMENTS

The technical solutions in the examples of the present disclosure will be clearly and completely described below with reference to the accompanying drawings in the examples of the present disclosure.

The present disclosure provides an automatic egg cracker, which includes two symmetrically-arranged egg holders 2 and two symmetrically arranged egg-cracking knives 1, where the egg holders 2 are provided with upward openings to form egg troughs, and the egg-cracking knives 1 impact eggs from side surfaces for cracking. A push rod 23 is arranged behind the egg holder 2 to synchronously drive at least one side of the egg-cracking knife 1 to open to crack the egg. According to the present disclosure, the egg-cracking knife 1 capable of cracking the egg from the side surface is arranged, such that the egg-cracking knife 1 does not stop egg liquid from flowing out at a side edge of an eggshell, and waste is avoided. The egg trough with the upward opening is arranged, such that the egg is positioned at the opening and will not fly out from the position above the opening when being cracked from the side surface, and an additional egg fixing device is not needed.

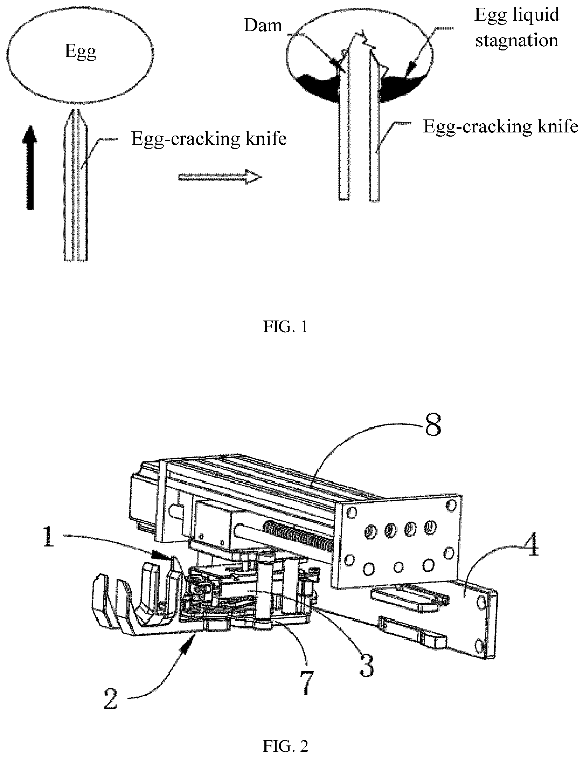

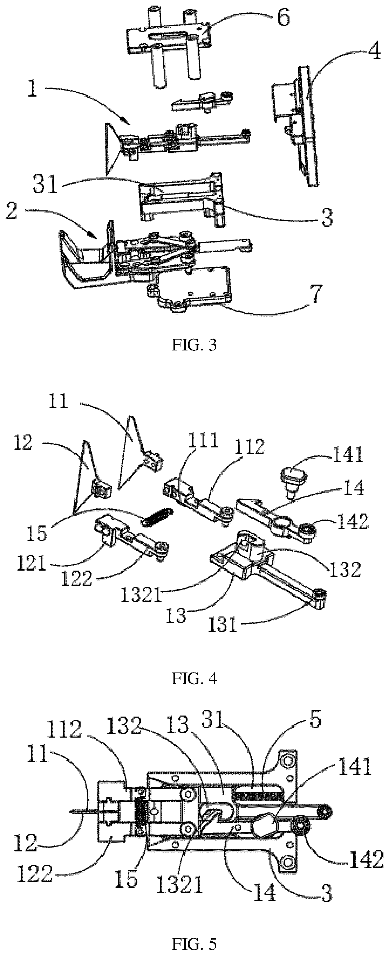

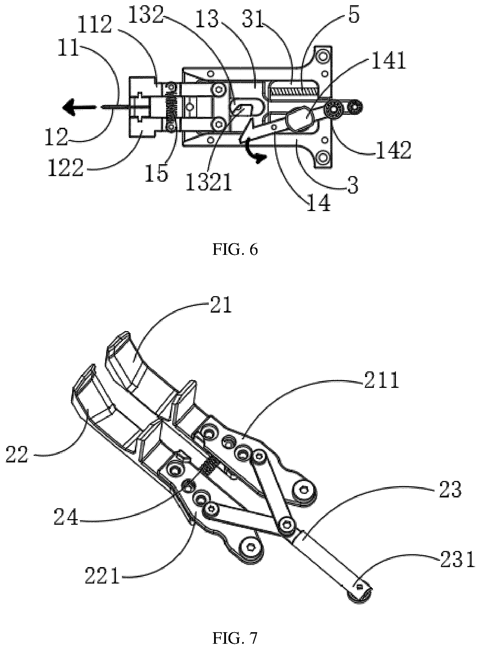

It should be noted that the egg-cracking knife 1 in the present disclosure may be triggered by a mechanical structure to crack the egg, or the egg-cracking knife 1 may be driven by a driving mechanism to crack the egg, such as an air cylinder or an electromagnetic valve. In an example of the present disclosure, the mechanical structure is configured for triggering egg cracking, and the details are as follows:
As shown in FIGs. 2-6, the egg-cracking knife 1 in the example of the present disclosure includes a left blade 12, a right blade 11, a sliding block 13, and a fixing frame 3 for mounting the sliding block 13, where the left blade 12 is fixedly arranged on the sliding block 13 by means of a left blade connecting member 122, and the right blade 11 is fixedly arranged on the sliding block 13 by means of a right blade connecting member 112. The left blade 12 and the right blade 11 are slidably arranged in a sliding groove 31 at an upper portion of the fixing frame 3 by means of the sliding block 13. A locking assembly is arranged on the sliding block 13, an energy storage device 5 is arranged at one end of the side edge of the sliding block 13 close to a locking direction (locking groove 1321), and a reset trigger rod 131 is arranged at the other end. An elastic egg blade member 15 is arranged between the left blade connecting member 122 and the right blade connecting member 112. In this example, a spring is employed to serve as the energy storage device 5, and when the locking assembly is in a locking state, the spring is compressed to generate stored energy. In this case, the state is shown in FIG. 5, the spring is positioned in the sliding groove 31, one end of the spring abuts against an inner wall of the sliding groove 31, and the other end of the spring abuts against the sliding block 13. The stored energy, due to compression of the spring, makes the sliding block 13 generate an impulse towards one end of the blade. Since the locking assembly locks the position of the sliding block 13, the sliding block 13 is fixed and cannot move. After the locking assembly is triggered and unlocked, as shown in FIG. 6, the spring expands to release the stored energy to the sliding block 13, and the sliding block 13 converts the stored energy of the spring into an impulse moving towards one end of the blade. In this case, the sliding block 13 drives the blade to slide in the sliding groove 31, and the blade impacts the egg in front so as to achieve an effect of cracking the egg.

It should be noted that the locking assembly in the present disclosure may be controlled to perform locking and unlocking by means of electric motor driving or mechanical triggering. In this example, the locking assembly is of a mechanical structure. Specifically, the locking assembly includes a sliding and buckling block 132 protruding upwards above the sliding block 13, a locking groove 1321 is formed at a side edge of the sliding and buckling block 132, and a sliding hook 14 is arranged on the sliding and buckling block 132 for matching the locking groove 1321 for use. The sliding hook 14 is arranged in a trigger manner, one end of the sliding hook is configured for hooking and fixing the locking groove 1321 of the sliding and buckling block 132, and the other end of the sliding hook is provided with an egg-cracking trigger rod 142. A middle portion of the sliding hook is fixed by means of a shaft pin 141 to enable both ends to rotate. As shown in the states of FIGs. 5 and 6, when the egg-cracking trigger rod 142 is triggered to move, the sliding hook 14 rotates along the shaft pin 141 by a certain angle, such that the sliding hook 14 is separated from the locking groove 1321, and locking of the sliding block 13 is released. It should be noted that the fixing frame 3 further includes a hollow upper cover plate 6, the sliding and buckling block 132 extends out of the hollow portion of the upper cover plate 6, and the shaft pin 141 on the sliding hook 14 for fixing a rotation point is fixed on the upper cover plate 6, such that the upper cover plate 6 can not only fix the position of the shaft pin 141, but also prevent dust from falling, thus protecting the mechanical structure below the upper cover plate 6.

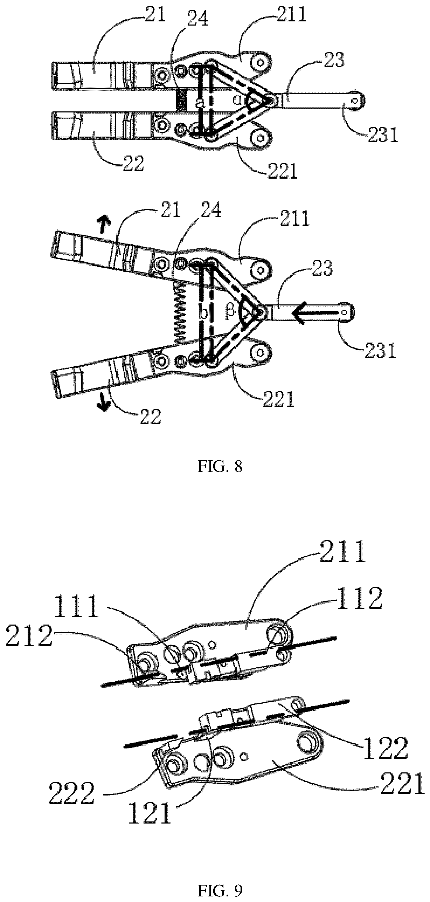

As shown in FIG. 7, the egg holder 2 in the example of the present disclosure includes a left egg supporting block 22 and a right egg supporting block 21, and when the left egg supporting block 22 and the right egg supporting block 21 get close to each other side by side, the egg trough with the upward opening for placing the egg is formed. The push rod 23 is a double-rod push rod, the push rod 23 is fixedly arranged below the fixing frame 3, a left egg holder connecting member 221 and a right egg holder connecting member 211 are arranged on both sides of the push rod 23, and an egg holder trigger rod 231 is arranged at one end of the push rod 23. An egg holder elastic member 24 is arranged between the left egg holder connecting member 221 and the right egg holder connecting member 211, the left egg supporting block 22 and the right egg supporting block 21 are controlled to open by means of the push rod 23, and the left egg supporting block 22 and the right egg supporting block 21 are controlled to automatically close by means of the egg holder elastic member 24. The push rod 23 is fixedly arranged below the fixing frame 3 by arranging a lower cover plate 7, and the push rod 23 may be a double-rod structure with a triangular relationship or a structure having a push block. In this example, the push rod 23 is of the double-rod structure. An included angle between the two rods may be changed along with the movement of the push rod 23. One end of a main rod of the push rod 23 is provided with a trigger structure, that is, one end of the main rod of the push rod 23 is provided with an egg holder trigger rod 231, and the left egg holder connecting member 221 and the right egg holder connecting member 211 are fixedly connected to the two rods of the push rod 23 respectively and are positioned at both sides of the push rod 23. As shown in FIG. 8, when the egg holder trigger rod 231 is triggered to displace towards the direction of the egg, the push rod 23 displaces in the same direction, an opening and closing angle between the two rods changes from a to β, and a distance between ends of the two rods changes from a to b. It can be clearly seen that α<β and a<b, and the ends of the two rods are fixed on the left egg holder connecting member 221 and the right egg holder connecting member 211 respectively. Therefore, as the egg holder trigger rod 231 is triggered to displace towards the direction of the egg, the push rod 23 pushes the left egg holder connecting member 221 and the right egg holder connecting member 211 to move away from each other, and further drives the left egg supporting block 22 and the right egg supporting block 21 to separate to both sides, such that the egg liquid flows out after the eggshell is cracked and falls onto a frying pan or any other egg liquid collecting device.

It should be noted that the egg-cracking knife 1 in the present disclosure can only achieve the function of cracking the egg under an action of the energy storage device 5 and the locking assembly, that is, only the left blade 12 and the right blade 11 can impact and crack the eggshell. In this case, the left blade 12 and the right blade 11 are in a closed state. In order to make the left blade 12 and the right blade 11 separate from each other, so as to crack the eggshell and make the egg liquid flow out, an electric motor may be configured for controlling the left blade connecting member 122 and the right blade connecting member 112 to separate from each other, or synchronously controlling the opening of the egg-cracking knife 1 clamped in the egg by means of the opening of the egg holder 2 so as to make the egg liquid flow out. In this example, a structural design in which the egg-cracking knife 1 and the egg holder 2 are synchronously opened is employed.

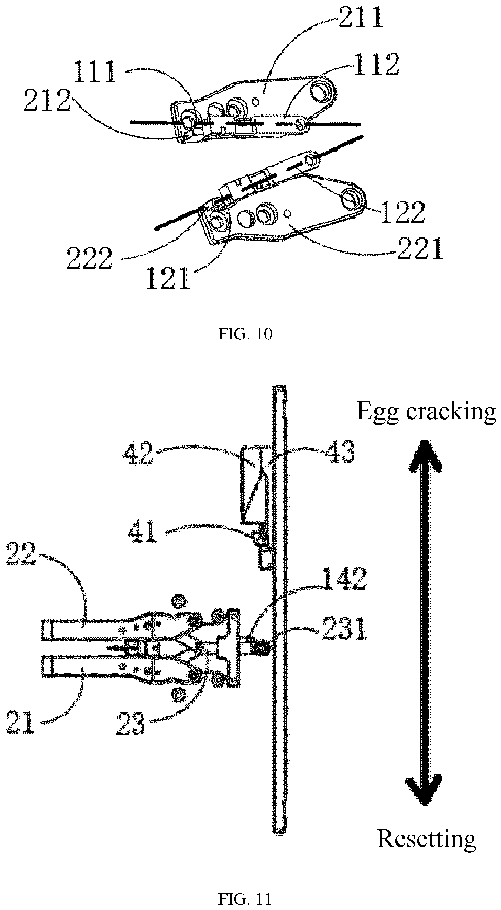

Specifically, as shown in FIGs. 9 and 10, in the example of the present disclosure, an upper end of the left egg holder connecting member 221 is provided with a left guide block 222 with an inclined plane, a lower end of the left blade connecting member 122 is provided with a left convex block 121 extending downwards, an upper end of the right egg holder connecting member 211 is provided with a right guide block 212 with an inclined plane, and a lower end of the right blade connecting member 112 is provided with a right convex block 111 extending downwards. In this example, both the left guide block 222 and the right guide block 212 are of trapezoidal structures, and the trapezoidal structures are arranged to guide the left convex block 121 and the right convex block 111 along the trapezoidal inclined surfaces of the left guide block 222 and the right guide block 212 to the non-inclined surface portion better. The left guide block 222 and the right guide block 212, and the left convex block 121 and the right convex block 111 are both symmetrically arranged. When the egg-cracking knife 1 is unlocked and rushed out towards the egg direction by means of the energy storage device 5, and before the stored energy in the energy storage device 5 is not completely consumed, since the elastic egg blade member 15 is pulled between the right blade connecting member 112 and the left blade connecting member 122, a force between the left blade 12 and the right blade 11 always exists for pulling same to be close to each other and keep attached to each other, such that the left blade and the right blade are synchronized to impact and crack the eggshell. In this case, the states of the left blade connecting member 122, the right blade connecting member 112, the left egg holder connecting member 221 and the right egg holder connecting member 211 are shown in FIG. 9. The left blade connecting member 122 and the right blade connecting member 112 are in parallel relationship with each other. Then, the energy storage device 5 continues to provide stored energy to further penetrate the left blade 12 and the right blade 11 into the egg. In this case, the left blade 12 and the right blade 11 only crack the egg. When the push rod 23 pushes the left blade connecting member 122 and the right blade connecting member 112 to separate to both sides, the left convex block 121 is driven by the left guide block 222, and the right convex block 111 is driven by the right guide block 212. The left convex block 121 and the right convex block 111 are separated to both sides. In this case, the states of the left blade connecting member 122, the right blade connecting member 112, the left egg holder connecting member 221, and the right egg holder connecting member 211 are shown in FIG. 10. There is a certain included angle between the left blade connecting member 122 and the right blade connecting member 112, and the included angle at the end close to the left blade 12 and the right blade 11 is relatively large, such that the left egg holder connecting member 221 connected to the left convex block 121 and the right egg holder connecting member 211 connected to the right convex block 111 actually move to both sides synchronously, and the left blade 12 and the right blade 11 are further driven to move to both sides, thereby achieving the effect that the left blade 12 and the right blade 11 open the cracked eggshell and make the egg liquid flow out.

It should also be noted that in some examples, when the egg holder 2 and the egg-cracking knife 1 open, one portion may move separately, and the other portion may be fixed, or in other examples, both portions may move towards both sides at the same time to achieve the separation and opening. Specifically, for example, the left egg supporting block 22 and the left blade 12 remain fixed, and the right egg supporting block 21 and the right blade 11 move towards the open side under driving of the electric motor. On the contrary, the right egg supporting block 21 and the right blade 11 remain fixed, and the left egg supporting block 22 and the left blade 12 may move in the direction of cracking the egg under driving of the electric motor, or a symmetrical guide structure is employed as in the above example so as to drive the symmetrically-arranged egg holder 2 and the symmetrically-arranged egg-cracking knife 1 to move to both sides along the symmetrical center, so as to achieve opening and closing movement of the egg holder 2 and the egg-cracking knife 1.

The automatic egg cracker in the example of the present disclosure is driven by a driving device 8 to slide integrally, where a ball screw and an electric motor are employed in the driving device 8 in this example, and a trigger mechanism 4 is employed to control an egg cracking action in a driving process. The egg-cracking knife 1 is driven to open by the egg holder 2 so as to achieve the egg cracking action, an automatic resetting (hereinafter referred to as resetting) action of the egg-cracking knife 1 and an automatic eggshell dropping (hereinafter referred to as shell dropping) action of the egg holder 2 are further set after the egg liquid flows out, and these actions may also be automatically achieved by the trigger mechanism 4, such that the egg cracking operation can be fully automated. The trigger mechanism 4 includes an egg-cracking trigger portion 41, a reset trigger portion 42 and an egg holder trigger portion 43, where the egg holder trigger portion 43 includes part of the trigger structures required for egg cracking, specifically, the push rod 23 may be displaced in the direction of the egg for a short distance, that is, the egg holder trigger rod 231 at one end of the push rod 23 makes contact with a first inclined surface of the egg holder trigger portion 43 and climbs along the first inclined surface, such that the push rod 23 displaces towards the egg. The overall operation steps of the automatic egg cracker in the examples of the present disclosure will be described below.

Referring to FIGs. 2-11, the egg holder 2 is located at one end of the trigger mechanism 4, and the delivered egg is placed in the egg trough. Then, the driving device 8 starts to drive the egg cracker to move in an egg cracking direction. Firstly, the egg-cracking trigger rod 142 and the egg-cracking trigger portion 41 act, such that when the egg-cracking trigger rod 142 is triggered to move, the sliding hook 14 rotates along the shaft pin 141 at a certain angle, and the sliding hook 14 is separated from the locking groove 1321, thereby unlocking the sliding block 13. The sliding block 13 drives the left blade 12 and the right blade 11 to impact and crack the egg by means of the energy storage device 5, the left blade 12 and the right blade 11 keep the closed state and are clamped into the egg, then the egg holder trigger rod 231 makes contact with the egg holder trigger portion 43, and completes a climbing action at the first inclined plane of the egg holder trigger portion 43, such that the push rod 23 displaces towards the egg direction, and the push rod 23 pushes the left egg supporting block 22 and the right egg supporting block 21 to separate. Since a separation distance is small, the eggshell will not fall off from the egg holder 2. Since the left convex block 121 and the right convex block 111 of the egg-cracking knife 1 are clamped into the left guide block 222 and the right guide block 212 respectively at this time, when the left guide block 222 and the right guide block 212 are separated to both sides, the left blade 12 and the right blade 11 are driven to separate to both sides, such that the eggshell is opened from an opening of the egg cracking position, and the egg liquid in the eggshell flows down from the portion between the left blade 12 and the right blade 11, and falls to a lower portion by means of a gap between the opened left egg holder 2 and right egg holder 2 for egg frying or egg liquid collecting.

Then, the driving device 8 continues to drive the egg cracker to move in the egg cracking direction. After the egg-cracking trigger rod 142 is separated from the egg-cracking trigger portion 41, the sliding hook 14 rotates back to a locking angle along the shaft pin 141, while the sliding block 13 does not reset at this time. When the egg cracker continues to move in the egg cracking direction to the reset trigger portion 42, the reset trigger rod 131 climbs along the inclined surface of the reset trigger portion 42 in the direction away from the egg, such that the reset trigger rod 131 is driven by the reset trigger portion 42 to push away from the egg, thereby withdrawing the egg-cracking knife 1 from the eggshell. Moreover, the left convex block 121 and the right convex block are separated from the left guide block 222 and the right guide block 212 respectively, and are tightly attached again under the action of the elastic egg blade member 15. When the sliding block 13 makes contact with the sliding hook 14, the sliding hook 14 slides into the locking groove 1321 again for locking. Then, the driving device 8 continues to drive the egg cracker to move in the egg-cracking direction, and when the egg cracker moves to the position where the egg holder trigger portion 43 is configured for triggering shell dropping, that is, the second inclined surface of the egg holder trigger portion 43. The push rod 23 is further pushed towards the egg direction by the egg holder trigger portion 43, such that the left egg supporting block 22 and the right egg supporting block 21 are separated further, and the eggshell drops from the gap between the left egg supporting block and the right egg supporting block to achieve shell dropping.

Finally, the egg holder 2 is located at the other end of the trigger mechanism 4, and the driving device 8 drives the egg cracker to move in the resetting direction in a reverse direction. Since the egg holder elastic member 24 is arranged between the left egg holder connecting member 221 and the right egg holder connecting member 211, the egg holder elastic member 24 pulls the left egg holder connecting member 221 and the right egg holder connecting member 211 to keep close to each other continuously, and when the egg holder trigger rod 231 at one end of the push rod 23 moves in the resetting direction along the egg holder trigger portion 43, the pushing force of the push rod 23 to the left egg holder connecting member 221 and the right egg holder connecting member 211 is gradually reduced to be completely absent. The egg holder elastic member 24 pulls the left egg holder connecting member 221 and the right egg holder connecting member 211 to be gradually reset, and finally the egg cracker returns to an initial position for receiving eggs, that is, a process of automatic egg cracking is completed. The egg cracker is driven to slide by means of the driving device 8, and all the egg cracking, eggshell opening, resetting and shell dropping operations are completed at one time. The egg cracker has an ingenious structure, saves an internal space of a small machine, improves a space utilization rate, and can be applied to the small machine with a small mounting space.

For those skilled in the art, it is apparent that the present disclosure is not limited to the details of the above-mentioned exemplary examples, and the present disclosure may be implemented in other specific forms without departing from the spirit or basic features of the present disclosure. Therefore, no matter from which point of view, the examples should all be regarded as exemplary and non-limiting. The scope of the present disclosure is defined by the appended claims rather than the above-mentioned description, and therefore it is intended that all changes which fall within the meaning and scope of equivalency of the claims are embraced in the present disclosure. Any reference numeral in the claims should not be construed as limiting the related claims.

In addition, it should be understood that although the present description is described according to the embodiments, not each embodiment only contains an independent technical solution, and the specification manner of the description is only for clarity. Those skilled in the art should take the description as a whole, and the technical solutions in the examples can also be appropriately combined to form other embodiments that can be understood by those skilled in the art.

## Claims

1. An automatic egg cracker, **characterized by** comprising two symmetrically-arranged egg-cracking knives (1) and two symmetrically-arranged egg holders (2), wherein the egg holders (2) are provided with upward openings to form egg troughs, the egg-cracking knives (1) impact eggs from side surfaces for cracking, and a push rod (23) is arranged behind the egg holder (2) to synchronously drive at least one side of the egg-cracking knife (1) to open to crack the egg.

2. The automatic egg cracker according to claim 1, **characterized in that** both sides of the egg-cracking knife (1) are opened simultaneously to crack the egg.

3. The automatic egg cracker according to claim 1, **characterized in that** one side of the egg-cracking knife (1) is fixed, and the other side is opened to crack the egg.

4. The automatic egg cracker according to claim 2, **characterized in that** the egg-cracking knife (1) comprises a left blade (12), a right blade (11), a sliding block (13) and a fixing frame (3) for mounting the sliding block (13), the left blade (12) is fixedly arranged on the sliding block (13) by means of a left blade connecting member (122), the right blade (11) is fixedly arranged on the sliding block (13) by means of a right blade connecting member (112), the left blade (12) and the right blade (11) are slidably mounted in a sliding groove (31) at an upper portion of the fixing frame (3) by means of the sliding block (13), a locking assembly is arranged on the sliding block (13), an energy storage device (5) configured for pushing the egg-cracking knife (1) to crack the egg is arranged at one end of the side edge, close to a locking direction, of the sliding block (13), a reset trigger rod (131) is arranged at the other end, and an elastic egg blade member (15) is arranged between the left blade connecting member (122) and the right blade connecting member (112).

5. The automatic egg cracker according to claim 4, **characterized in that** the locking assembly comprises a sliding and buckling block (132) arranged on the sliding block (13), a locking groove (1321) is formed at a side edge of the sliding and buckling block (132), and a sliding hook (14) matching the locking groove (1321) is arranged on the sliding and buckling block (132).

6. The automatic egg cracker according to claim 5, **characterized in that** one end of the sliding hook (14) is configured for fixing the locking groove (31) in the sliding and buckling block (132), the other end of the sliding hook is provided with an egg-cracking trigger rod (142), and a middle portion of the sliding hook is fixed by means of a shaft pin (141) so as to enable both ends to rotate.

7. The automatic egg cracker according to claim 1, **characterized in that** the egg holder (2) comprises a left egg supporting block (22) and a right egg supporting block (21), and when the left egg supporting block (22) and the right egg supporting block (21) get close to each other side by side, the egg trough with the upward opening for placing the egg is formed.

8. The automatic egg cracker according to claim 1, **characterized in that** the push rod (23) is a double-rod push rod, the push rod (23) is fixedly arranged below the fixing frame (3), a left egg holder connecting member (221) and a right egg holder connecting member (211) are arranged on both sides of the push rod (23), an egg holder trigger rod (231) is arranged at one end of the push rod (23), and an egg holder elastic member (24) is arranged between the left egg holder connecting member (221) and the right egg holder connecting member (211).

9. The automatic egg cracker according to claim 8, **characterized in that** an upper end of the left egg holder connecting member (221) is provided with a left guide block (222) with an inclined plane, a lower end of the left blade connecting member (122) is provided with a left convex block (121) extending downwards, an upper end of the right egg holder connecting member (211) is provided with a right guide block (212) with an inclined plane, a lower end of the right blade connecting member (112) is provided with a right convex block (111) extending downwards, and the left guide block (222) and the right guide block (212), and the left convex block (121) and the right convex block (111) are both symmetrically arranged.

10. The automatic egg cracker according to claim 1, **characterized by** further comprising a trigger mechanism (4) and a driving device (8), wherein the trigger mechanism (4) comprises an egg-cracking trigger portion (41), a reset trigger portion (42) and an egg holder trigger portion (43), and the egg holder trigger portion (43) is also configured for triggering egg cracking.
